Europäisches Patentamt

European Patent Office

Office européen des brevets

(11) Veröffentlichungsnummer: **0 145 985**
**A2**

(12) **EUROPÄISCHE PATENTANMELDUNG**

(21) Anmeldenummer: **84113935.5**

(22) Anmeldetag: **17.11.84**

(51) Int. Cl.⁴: **B 23 B 31/04**

(30) Priorität: **16.12.83 CH 6720/83**

(43) Veröffentlichungstag der Anmeldung: **26.06.85**
**Patentblatt 85/26**

(84) Benannte Vertragsstaaten: **AT BE DE FR GB IT NL SE**

(71) Anmelder: **UTILIS Müllheim AG, Hauptstrasse,**
**CH-8555 Müllheim Dorf (DE)**

(72) Erfinder: **Huser, Josef Paul, Lindenhöhe,**
**CH-6045 Meggen (CH)**

(74) Vertreter: **Feldmann, Clarence Paul et al, c/o**
**Patentanwaltsbüro FELDMANN AG Postfach**
**Kanalstrasse 17, CH-8152 Glattbrugg (CH)**

(54) **Halter für Werkzeuge mit zylindrischem Schaft.**

(57) Ein Werkzeughalter bestehend aus einer Hülse (1) mit Gewindeloch (3) dient zur Aufnahme eines zylindrischen Werkzeugschaftes (2). Eine dem Gewindeloch (3) diametral gegenüberliegende Ausnehmung (10) in der Innenwandung (8) garantiert eine exakte Dreipunktlagerung zwischen der Klemmschraube (3) und den seitlichen Kanten (9) der Ausnehmungen (10).

EP 0 145 985 A2

0145985

Utilis Müllheim AG

CH-8555 <u>Müllheim</u>            - 1 -

<u>Halter für Werkzeuge mit zylindrischem Schaft</u>

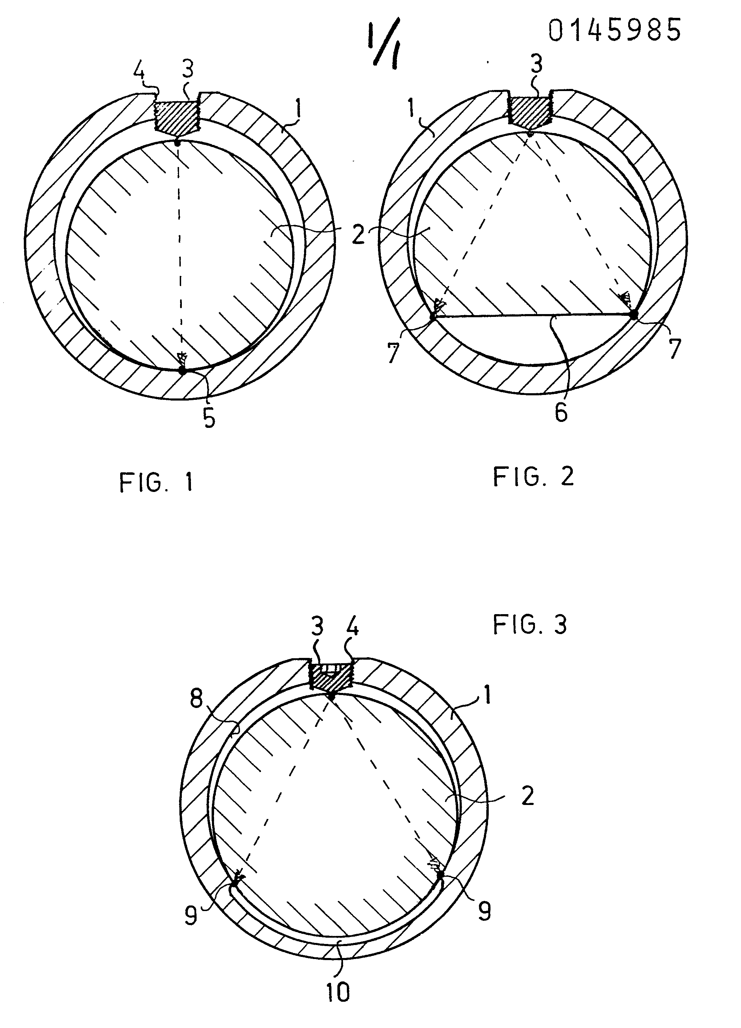

Die vorliegende Erfindung betrifft einen Werkzeughalter für Werkzeuge mit zylindrischem Schaft, bestehend aus einer Hülse mit mindestens einem radialen Gewindeloch und darin angeordneter Klemmschraube. Die Verbindung zwischen der Spindel einer Werkzeugmaschine, wie Drehbank oder Bohrwerk, erfolgt immer indirekt. So ist an der Spindel eine Werkzeugaufnahme vorgesehen in die ein Grundkörper, meist mit genormten Konus Aufnahme findet. Das Werkzeug selber ist in einem Werkzeughalter befestigt, welcher mit dem Grundkörper verbunden ist. Der Werkzeughalter besteht aus einer zylindrischen Stahlhülse mit einem endständigen Flansch. In der Hülse ist ein Gewindeloch oder, auf einer Mantellinie mehrere Gewindelöcher angeordnet. Mittels Schrauben, beziehungsweise Gewindestifte die in die Gewindelöcher passen, werden die Werkzeuge im Werkzeughalter geklemmt. In Figur 1 ist ein Werkzeughalter nach dem Stand der Technik dargestellt. Die Stahlhülse 1 des Werkzeughalters weist einen

- 2 -

Innendurchmesser auf, der geringfügig grösser ist als der Durchmesser des Werkzeugschaftes 2. Durch die Klemmschraube 3 im Gewindeloch 4 wird der Schaft 2 leicht aus dem Zentrum gedrückt und liegt an der diametral gegenüberliegenden Wand entlang einer Mantellinie 5 an. Diese Art der Klemmung, mit einer reinen Zweipunktauflage, führt bei der Bearbeitung je nach dem vorhandenen Spiel zu mehr oder weniger starken Vibrationen. Dieses Problem wurde erkannt und dadurch gelöst, dass der zylindrische Schaft 2 der Werkzeuge einseitig parallel zur Achse plangeschliffen wurde. Die plangeschliffene Fläche 6 wird durch zwei Kanten 7 begrenzt, die bei korrektem Einspannen des Werkzeuges als Auflagekanten dienen. Diese sogenannte Dreipunkt - Halterung führt zu einem wesentlich ruhigerem Lauf. Nachteilig bei dieser Lösung ist einerseits die Bedingung, dass die plangeschliffene Fläche 6 exakt diametral der Klemmschraube gegenüber liegen muss, was oftmals zuwenig beachtet wird und des weiteren eine Anpassung sämtlicher Werkzeuge erfordert.

Es ist daher die Aufgabe der vorliegenden Erfindung einen Werkzeughalter zu schaffen, der für alle Werkzeuge mit zylindrischem Schaft eine exakte Dreipunktlagerung garantiert, unabhängig von der Winkellage des Werkzeuges im

uti 7/CH

Werkzeughalter.

Diese Aufgabe löst ein Halter für Werkzeuge mit zylindrischem Schaft bestehend aus einer Hülse mit mindestens einem radialen Gewindeloch und darin angeordneter Klemmschraube dadurch, dass die Innenwandung der Hülse eine über die gesamte Hülsenlänge sich erstreckende, diametral dem Gewindeloch gegenüberliegende Ausnehmung mit parallen Seitenkanten aufweist.

In der Zeichnung ist der eingangs beschriebene Stand der Technik, sowie ein Ausführungsbeispiel des Erfindungsgegenstandes vereinfacht dargestellt. Es zeigt:

Figur 1 einen Schnitt durch einen Werkzeughalter mit darin gehaltenem Werkzeug, gemäss Stand der Technik;

Figur 2 einen Schnitt durch denselben Werkzeughalter mit darin liegenden einseitig plangeschliffenen Werzeugschaft und

Figur 3 eine erfindungsgemäss Ausführungsform eines Werkzeughalters.

Gleich wie bei den Beispielen zur Erläuterung des Standes der Technik, gemäss Figur 1 und 2 ist die Hülse des Halters mit 1 bezeichnet. Der Schaft 2 des Werkzeuges ist vollständig zylindrisch und bedarf daher keinerlei Positionierung. Gleich dem Werkzeughalter gemäss Stand der Technik weist auch der erfindungsgemässe Halter ein Gewindeloch 4, welches genau radial verläuft, auf. Ueblicherweise sind zwei solcher auf einer Mantellinie liegende Gewindelöcher angeordnet. Im Gewindeloch 4 sitzt eine Klemmschraube 3 mit Innensechskant. Die Schraube beziehungsweise die Schrauben 3 drücken den Werkzeugschaft in Richtung der gegenüberliegenden Innenwandung 8. Hier ist jedoch die Innenwandung 8 mit einer untiefen Ausnehmung 10 versehen, so dass der Schaft 2 des Werkzeuges auf den beiden parallelen Kanten der Ausnehmungen 10 aufliegt. Dadurch ergibt sich eine exakte Dreipunktlagerung zwischen den Klemmschrauben 3 und den Kanten 9 der Vertiefung 10. Es ist klar, dass die Lagestabilität des Werkzeugschaftes im Werkzeughalter wesentlich von der Distanz der beiden Kanten 9 abhängt. Der Mindest - Abstand sollte etwa dem Innenradius der Hülse 1 entsprechen. Eine optimale Kraftverteilung erhält man jedoch, wenn die Breite der Ausnehmungen 10 genau einen Drittel des Innenumfanges entspricht.

0145985

Das Spiel zwischen Werkzeugschaft 2 und Hülse 1 ist in den Figuren zur besseren Verständlichkeit der Funktion übertrieben dargestellt. Selbstverständlich ist man bestrebt das Spiel zwischen Halter und Werkzeugschaft so gering wie möglich zu halten. Entsprechend ist auch eine Abweichung der Werkzeugachse vom Zentrum kaum wahrnehmbar. Das jedoch erforderliche Spiel zwischen Werkzeughalter und Werkzeugschaft genügt um bei Zweipunktlagerung wie in Figur 1 dargestellt eine Laufunruhe hervor zu rufen.

Die fixe Anordnung von Gewindeloch, beziehungsweise Gewindelöchern 4, und der Ausnehmung 10 in exakter Opposition, bedeutet, dass der Schaft 2 unabhängig von seiner relativen Winkellage zum Werkzeughalter gehalten werden kann. Eine exakte Dreipunktlagerung ist somit immer garantiert.

                                        uti 7/CH

Utilis Müllheim AG

8555 Müllheim

PATENTANSPRUECHE

1. Werkzeughalter für Werkzeuge mit zylindrischem Schaft (2), bestehend aus einer Hülse (1) mit mindestens einem radialen Gewindeloch (4) und darin angeordneter Klemm - Schraube (3), dadurch gekennzeichnet, dass die Innenwandung der Hülse (1) eine über die gesamte Hülsenlänge sich erstreckende, diametral dem Gewindeloch gegenüber liegende Ausnehmung (10) mit parallelen Seitenkanten (9) aufweist.

2. Halter nach Anspruch 1, dadurch gekennzeichnet, dass die Beite der Ausnehmungen (10) mindestens dem Innenradius der Hülse (1) entspricht.

3. Halter nach Anspruch 1, dadurch gekennzeichnet, dass die Breite der Ausnehmnungen (10) genau einem Drittel des Innenumfangs entspricht.

uti 7/CH

- 1 -

FIG. 1

FIG. 2

FIG. 3